Europäisches Patentamt

European Patent Office

Office européen des brevets

(11) Veröffentlichungsnummer: **0 369 247**

**A1**

(12) # EUROPÄISCHE PATENTANMELDUNG

(21) Anmeldenummer: **89120319.2**

(22) Anmeldetag: **03.11.89**

(51) Int. Cl.⁵: **C08B 5/08, C09D 101/18**

(30) Priorität: **15.11.88 DE 3838645**

(43) Veröffentlichungstag der Anmeldung:
**23.05.90 Patentblatt 90/21**

(84) Benannte Vertragsstaaten:
**DE ES FR GB IT**

(71) Anmelder: **Wolff Walsrode Aktiengesellschaft
Postfach
D-3030 Walsrode 1(DE)**

(72) Erfinder: **Hoppe, Lutz, Dr.
Am Badeteich 8
D-3030 Walsrode(DE)**
Erfinder: **Szablikowski, Klaus, Dr.
Claudiusstrasse 5
D-3030 Walsrode(DE)**
Erfinder: **Piepho, Michael, Dr.
Goethestrasse 42
D-3210 Elze(DE)**

(74) Vertreter: **Zobel, Manfred, Dr. et al
c/o BAYER AG Konzernverwaltung RP
Patente Konzern
D-5090 Leverkusen 1 Bayerwerk(DE)**

(54) **Verfahren zur Herstellung phlegmatisierter Nitrocellulosegemische.**

(57) Durch Auspressen von wasserfeuchter oder alkoholfeuchter Nitrocellulose auf einem Zwei-Walzen-Aggregat und gleichzeitige Einarbeitung eines gelatinierenden Phlegmatisierungsmittels lassen sich nahezu wasserfreie Nitrocellulose-Phlegmatisierungsmittel-Zubereitungen erzeugen, die rieselfähig sind und eine hohe Schüttdichte aufweisen.

## Verfahren zur Herstellung phlegmatisierter Nitrocellulosegemische

Gegenstand der Erfindung ist ein neues Verfahren zur Herstellung phlegmatisierter Nitrocellulose.

Nitrocellulose (genauer Cellulosenitrat) ist als ein wesentlicher Bestandteil vieler Lacksysteme bekannt (vgl. z.B. U. Biethan, Lacke und Lösemittel, Verlag Chemie GmbH, Weinheim, 1. Auflage (1979), S. 8). Aus Sicherheitsgründen müssen Nitrocellulose-Typen im Handel grundsätzlich mit einem Phlegmatisierungsmittel versetzt sein. Unter Phlegmatisierungsmittel werden im folgenden gemäß Seite 9 der o.g. Literaturstelle derartige Substanzen verstanden, die den Sprengstoffcharakter trockener Nitrocellulose herabsetzen.

Ein geeignetes Phlegmatisierungsmittel kann Wasser, ein Alkohol oder ein Weichmacher (z.B. Ester der Phthalsäure) sein (vgl. z.B. K. Fabel, Nitrocellulose, S. Enke-Verlag, 1950). Derartige Phlegmatisierungsmittel können nach unterschiedlichen Methoden in die Nitrocellulose eingearbeitet werden.

Wasser kann in Nitrocellulose über die Zentrifugentechnologie eingearbeitet werden, wobei durch Aufsprühen von Wasser Nitriersäure aus der Nitrocellulose-Herstellung durch Wasser in einer Zentrifuge verdrängt wird (vgl. K. Fabel, Nitrocellulose, S. 100 ff. und US-PS-3 063 981).

Ein Verfahren zur Herstellung von Rußkonzentraten auf Nitrocellulosebasis in Form von Chips unter Zusatz von OH-Gruppen-freien Weichmachern und Harzen wird in der DE-A-3 304 688 beschrieben. Nachteilig an diesem Verfahren ist jedoch, daß geschlossene Apparaturen, wie Kneter oder Extruder mit Knetschnecken verwendet werden. Diese praktisch geschlossenen Aggregate weisen den Nachteil auf, daß im Falle einer durch Reibung erzeugten Zersetzung von Nitrocellulose sich ein Überdruck aufbauen kann, welcher Explosionen bewirken kann. Außerdem wird bei diesem Verfahren stets Ruß mitverwendet.

Ein Verfahren zur Herstellung von Nitrocellulose-Chips ohne die Mitverwendung von Ruß wird in der DE-AS-1 203 652 beschrieben. Das Verfahren arbeitet nicht kontinuierlich, findet in einem geschlossenen Mischer statt und verwendet ausschließlich Weichmacher, die keine Hydroxylgruppen enthalten, z.B. Dibutylphthalat.

Nitrocellulose-Modifikationen, die entweder Alkohol oder Wasser als Phlegmatisierungsmittel enthalten oder Weichmacher, die keine Hydroxylgruppen enthalten, sind nicht in idealer Weise zur Kombination mit Isocyanaten geeignet. Die sich aus derartiger Kombination ergebenden Polyurethanlacke weisen entweder einen zu hohen Gehalt an monofunktionellen Alkoholen auf, die ohne die Ausbildung von Vernetzungsstellen mit Isocyanaten abreagieren, oder sie führen zur Blasenbildung in Folge der Entwicklung von Kohlendioxid aus der Reaktion von Wasser mit Isocyanaten. Bei Verwendung von Chips, die mit Weichmachern phlegmatisiert sind, die keine OH-Gruppen enthalten, kann es zu Ausschwitzerscheinungen der Weichmacher kommen, da diese nicht in das Polyurethannetzwerk eingebaut werden. Derartige Ausschwitzerscheinungen beeinflussen ebenso die Qualität von Polyurethanlackierungen negativ.

Als weitere Möglichkeit zur Herstellung von Nitrocellulose-Angebotsformen, die auch als Bindemittel in Polyurethanlacken geeignet sind, werden in der Literatur Produkte beschrieben, bei denen die Nitrocellulose mit flüchtigen inerten Lösungsmitteln phlegmatisiert ist. In der DE-A 3 041 085 werden Phlegmatisierungsmittel beschrieben, die flüchtig und zumindest teilweise Lösungsmittel für Nitrocellulose sind, so daß die Nitrocellulose-Phlegmatisierungsmittel-Kombinationen homogene Produkte darstellen.

Der Nachteil der Systeme nach der DE-A 3 041 085 ist jedoch, daß die erwähnten inerten gelatinierenden Komponenten (Beispiel: Ethylacetat, Cyclohexanon) bei der Anwendung verdampfen. Aufgrund der Flüchtigkeit der genannten Phlegmatisierungsmittel besteht ein Nachteil der Produkte darin, daß das Lösungsmittel während der Lagerung verdunsten kann. Dadurch erhält man Präparate mit sehr niedrigem oder gar keinem Gehalt an Lösungsmittel, wodurch das Brandrisiko der Nitrocellulosepräparate steigt. Ein weiterer Nachteil liegt in der aufwendigen Herstellung. Um das Wasser aus der Nitrocellulose-Wasser-Phlegmatisierungsmittel-Kombination zu entfernen, ist es erforderlich, das Wasser mit einem azeotropen Schlepper destillativ zu entfernen. Dieser Arbeitsschritt ist aufwendig und gefährlich.

Die Aufgabe der vorliegenden Erfindung bestand darin, nichtflüchtige, gelatinierende Phlegmatisierungsmittel in Nitrocellulose nach einem einfachen kontinuierlichen Verfahren einzuarbeiten, so daß die entstehenden Nitrocellulose-Phlegmatisierungsmittel-Zubereitungen nahezu frei von Wasser sind. Der Wassergehalt sollte unter 2,5 %, vorzugsweise unter 1,5 % und in besonderen Fällen unter 1 % liegen.

Gegenstand der Erfindung ist ein Verfahren zur simultanen Verdrängung von Wasser oder Alkohol aus damit angefeuchteter Nitrocellulose und gleichzeitiger Phlegmatisierung der Nitrocellulose, dadurch gekennzeichnet, daß man die Verdrängung des Wassers bzw. Alkohols und Einarbeitung des Phlegmatisierungsmittels auf einem Scherwalzenaggregat durchführt.

Bei dem Scherwalzenaggregat handelt es sich vorzugsweise um einen offenen Doppelschneckenextruder mit zwei hintereinander horizontal angeordneten Scherwalzen, die gegenläufig arbeiten, wobei das Produkt auf der einen Seite der Walzen aufgegeben und auf der anderen Seite abgenommen wird. Die Walzen sind mit Schernuten ausgerüstet, die den Transport des aufgegebenen Gemisches bewerkstelligen.

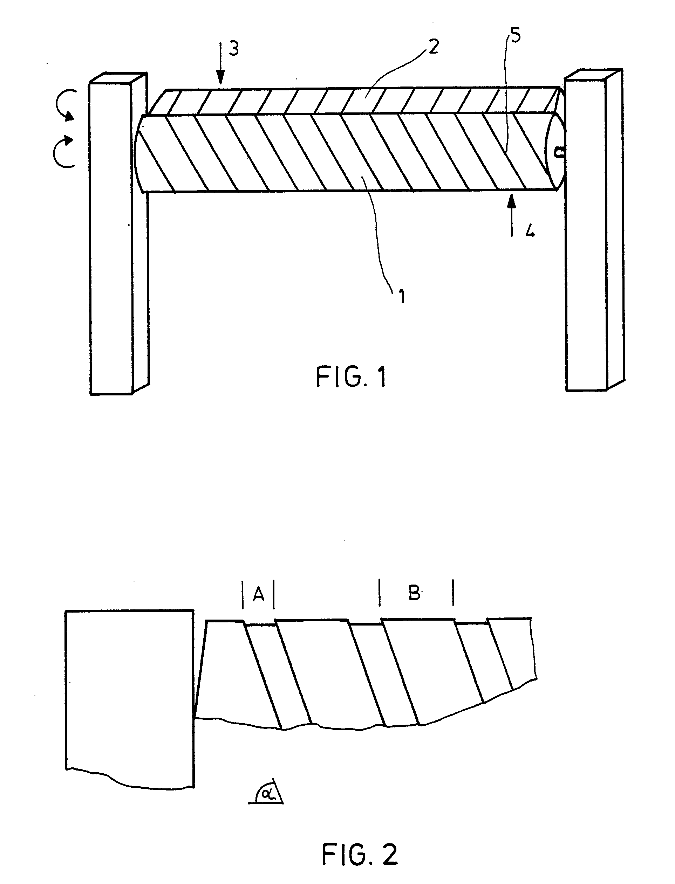

In einer bevorzugtern Ausführungsform wird Nitrocellulose (vorzugsweise angefeuchtet mit mehr als 25 % Wasser oder Alkoholen, wie z.B. Ethanol, Isopropanol oder Butanol) auf ein Scherwalzen-Aggregat (z.B. der Fa. Color-metal, Heitersheim) gegeben, wobei sich die beiden Walzen in kurzem Abstand (vorzugsweise 0,5-4 mm) zueinander befinden. Die ganz oder teilweise beheizbaren oder kühlbaren Walzen drehen sich ineinander und kneten nach Art eines Kalanders die Wasser-Nitrocellulose-Phlegmatisierungsmittel-Mischung. Dabei entsteht ein homogenes Nitrocellulose-Phlegmatisierungsmittel-Gemisch; das Wasser trennt sich vom Feststoff, verdampft von den beheizbaren Walzen und/oder wird ausgepreßt und läuft von dem Walzenaggregat ab. In einer bevorzugten Ausführungsform wird so verfahren, daß das Phlegmatisierungsmittel die Nitrocellulose löst und andererseits mit Wasser (bzw. Alkohol) unmischbar ist oder nur begrenzt mischbar ist (nicht mehr als 10 % Phlegmatisierungsmittel sollten sich in Wasser lösen, andererseits sollten sich nicht mehr als 10 % Wasser im Phlegmatisierungsmittel lösen). Vorzugsweise sind in die Walzen der Maschine Quernuten (siehe Abb. 1 und 2) eingearbeitet.

Abbildung 1 zeigt ein erfindungsgemäß zu verwendendes Scherwalzenaggregat mit einer vorderen Walze 1, einer hinteren Walzen 2, einer Aufgabezone 3 und einer Entnahmezone 4. Das mit 5 gekennzeichnete Merkmal stellt eine der Nuten dar, die in Abbildung 2 genauer wiedergegeben sind.

Die Breite A der Nuten beträgt bevorzugt 5 bis 30 mm, die Tiefe 1 bis 5 mm, der Abstand C zwischen den Nuten 30 bis 300 mm und der Winkel α (vgl. Abb. 2), mit dem die Nuten versetzt zur Rotationsachse der Walzen eingearbeitet sind, 10 bis 80°. Durch diese eingearbeiteten Nuten ist es möglich, das Material auf dem Walzenaggregat von einem Walzenende zum anderen kontinuierlich zu fördern. Die Rohstoffe können separat über Dosieraggregate kontinuierlich in den Walzenspalt gegeben werden.

In einer bevorzugten Ausführungsform gibt man auf eine Hälfte des Walzenaggregats die Mischung aus mit Wasser-bzw. Alkohol-angefeuchteter Nitrocellulose und Phlegmatisierungsmittel ; auf der anderen Hälfte des Walzenaggregates wird die Nitrocellulose-Phlegmatisierungsmittel-Mischung, die weniger als 2,5 % Wasser enthält, entnommen. Die Mischung aus angefeuchteter Nitrocellulose und Phlegmatisierungsmittel wird zwischen Aufgabezone und Entnahmezone durch die in die Walzen eingear beiteten Nuten transportiert. Nach Entnahme der Nitrocellulose-Phlegmatisierungsmittel-Mischung von der Walze kann die Masse in Schuppen, Plättchen, Streifen oder Granulate überführt werden. Diese Formkörper können - falls erforderlich - z.B. mit einem handelsüblichen Warmlufttrockner nachgetrocknet werden. Die Schüttdichte der NC-Phlegmatisierungsmittel-Mischung beträgt 500 bis 900 g/l, wohingegen die Schüttdichte der eingesetzten, angefeuchteten Nitrocellulose nur ca. 250 bis 350 g/l beträgt.

An Phlegmatisierungsmitteln können sowohl chemisch inerte Substanzen (Beispiel: Ester der Phthalsäure oder Adipinsäure, z.B. Dibutylphthalat) als auch chemisch gegenüber Isocyanaten reaktive Verbindungen (z.B. Polyole) verwendet werden. Geeignete Polyole sind insbesondere solche Produkte, die einerseits Nitrocellulose lösen und andererseits mit Wasser nur in geringem Maße mischbar sind z.B. Polyesterpolyole.

Ein besonders bevorzugtes Phlegmatisierungsmittel ist ein Polyol P, welches

a) ein Lösungsmittel für Nitrocellulose ist,

b) in Wasser bei 20° C zu maximal 10 Gew.-% löslich ist und

c) nicht flüchtig ist.

Unter nicht flüchtigen Polyolen werden derartige verstanden, die eine Verdunstungszahl von > 1000 (Diethylether = 1), vgl. Karsten, Lackrohstofftabellen, 8. Aufl., CR. Vincent-Verlag, Hannover (1987) aufweisen.

Bei den Polyolen P handelt es sich vorzugsweise um Verbindungen mit einer Viskosität von 10 bis 3000 mPa.s, insbesondere von 100 bis 1000 mPa.s, gemessen bei 20° C. Der Hydroxylgehalt der Polyole P beträgt vorzugsweise von 1 bis 10 Gew.-%, insbesondere von 3 bis 8 Gew.-%.

In einer besonders bevorzugten Ausführungsform handelt es sich bei den Polyolen P um gegebenenfalls verzweigte hydroxylgruppenhaltige Polyester. Besonders bevorzugte Polyester P sind erhältlich durch Umsetzung wenigstens einer aliphatischen Dicarbonsäure, wenigstens eines Diols und wenigstens eines Alkohols mit mehr als drei OH-Gruppen und gegebenenfalls wenigstens einer mehrwertigen aromatischen Carbonsäure oder Derivaten davon.

Besonders bevorzugte Ausgangsprodukte für erfindungsgemäß zu verwendende Polyester sind:
aliphatische Dicarbonsäuren: Adipinsäure, Bernsteinsäure, Maleinsäure(anhydrid), hydrierte Phthalsäure(anhydrid),
Diole: 1,4-Butylenglykol, 1,2-Propylenglykol, Neopantylglykol,

mehrwertige Alkohole: Hexantriol, Trimethylolpropan, Pentaerythrit, Ricinusöl (ggf. hydriert),
aromatische Carbonsäure (Derivate): Phthalsäureanhydrid und Trimellitsäure(anhydrid).

Weitere verwendbare Phlegmatisierungsmitteln sind beispielsweise Ester der Phthal- oder Adipinsäure, insbesondere Dibutylphthalat. Neben mehrwertigen Alkoholen können auch einwertige Alkohole verwendet werden, z.B. Zitronensäuretributylester oder iso-Buttersäure-2,2-dimethyl-3-hydroxy-4-methylpentylester (Texanol der Fa. Eastman-Kodak). Auch Mischungen aus Phlegmatisierungsmitteln, die Nitrocellulose lösen, und Phlegmatisierungsmittel, die Nitrocellulose nicht lösen, sind einsetzbar, z.B. Mischungen aus Zitronensäureestern und Rizinusöl. Es ist auch möglich, Mischungen zu verwenden, bei denen eine Komponente eine höhere Wasserlöslichkeit als 10 % aufweist. Beispiel: Mischung aus einem Polyesterpolyol und Tripropylenglykol.

Es werden bevorzugt handelsübliche Nitrocellulosetypen unterschiedlicher Viskositätsstufen mit einem Stickstoffgehalt von 10 bis 12,6 % eingesetzt. Der Einsatz von Nitrocellulose mit einem Stickstoffgehalt bis zu 14,14 % (Maximum) ist ebenfalls möglich.

In einer bevorzugten Ausführungsform enthalten die erfindungsgemäßen Gemische, bezogen auf das Gesamtgewicht, wenigstens 18 %, insbesondere von 18 bis 35 Gew.-% des Phlegmatisierungsmittels (z.B. Polyol P). Wenn zusätzlich zum Phlegmatisierungsmittel Polyol P andere Phlegmatisierungsmittel zugesetzt werden, werden diese vorzugsweise in einer Menge von 5 bis 15 Gew.-%, bezogen auf das gesamte Gemisch, eingesetzt. Im Falle einer derartigen Abmischung von Phlegmatisierungsmitteln beträgt der gesamte Gehalt an Phlegmatisierungsmitteln vorzugsweise von 18 bis 50, insbesondere von 18 bis 35 Gew.-%.

Gegenstand der Erfindung ist schließlich die Verwendung der erfindungsgemäß hergestellten Nitrocellulosegemische für die Herstellung von Lacken, insbesondere zur Verwendung in Polyurethanlacken. Bevorzugte derartige Polyurethanlacke sind aufgebaut auf Basis von Polyisocyanaten, Polyolen, inerten organischen Lösungsmitteln, weiteren Hilfsstoffen wie Beschleunigern, Mattierungsmitteln, Pigmenten, Verlaufhilfsmitteln etc.

Beispiel 1

Nitrocellulose vom Normtyp 32 E (angefeuchtet mit 35 % Wasser) wird mittels einer Dosierschnecke kontinuierlich auf ein Scherwalzenaggregat (Länge der Walze: 1500 mm; Durchmesser der Walze: 200 mm) aufgebracht. Gleichzeitig erfolgt die Aufbringung eines hydroxylgruppenhaltigen Polyesters (Desmophen® 1200 der Bayer AG, Leverkusen) in der Weise, daß das Verhältnis zwischen trockener Nitrocellulose und Phlegmatisierungsmittel 7:3 beträgt. Die hintere der beiden Walzen wird auf 130° C thermostatisiert; die vordere auf 80° C. Die Drehzahl der vorderen Walze beträgt 35/min, die der hinteren Walze 27/min. Durchmischung der Nitrocellulose-Phlegmatisierungsmittel-Kombination erfolgt in der Weise, daß die Mischdauer auf der Walze (durchschnittliche Verweilzeit) ca. 3 min beträgt. In die Walzen sind Nuten in der Art und Weise eingearbeitet, daß eine Förderung der Nitrocellulose-Phlegmatisierungsmittel-Mischung von einer Seite der Walzen zur anderen erfolgt. Nachdem die Nitrocellulose-Phlegmatisierungsmittel-Kombination 3 min im Walzenspalt durchmischt und das Wasser ausgepreßt bzw. verdampft wurde, wurde mittels eines Schneidaggregates die Nitrocellulose-Phlegmatisierungsmittel-Mischung von der vorderen Walze abgenommen und zerkleinert. Der Restwassergehalt des Produktes betrug 1,5 %.

Anwendung:

Es wurden 6 g des erhaltenen Nitrocellulose-Granulates mit 4 g des Polyols P1 in 15 ml Butylacetat gelöst. Das Polyol P1 hat folgende Kennzahlen:
Hydroxylgehalt: ca. 5,2 %
Dichte bei 20° C nach DIN 51 757: ca. 1,12 g/cm$^3$
Viskosität bei 20° C: 300±50 mPa.s.

Es handelt sich bei dem Polyol P1 um einen hydroxylgruppenhaltigen verzweigten Polyester (Desmophen® 1200).

Durch Zugabe von 8 g Hexamethylendiisocyanat-Präpolymer (75 % Festkörper, gelöst in 1-Methoxypropylacetat-2/Xylol = 1/1) wurde ein reaktiver Zweikomponenten-Polyurethanlack mit einer Topfzeit >12 h und einem Festkörpergehalt von 48 % erhalten. Beschichtungen, erhalten aus 90 µm dicken Naßfilmen auf Glas, waren nach 48 h kratzfest und hatten eine Pendelhärte nach König (DIN 53 157) von 35 s.

Durch Zugabe von 12 g eines Isocyanat-Präpolymeren auf Basis von Toluylendiisocyanat und Hexamethylendiisocyanat (Desmodur® HL der Bayer AG mit 60 % Festkörper, gelöst in Butylacetat) erhält man einen reaktiven Polyurethanlack mit einer Topfzeit bei 25° C von 30 min und einem Festkörpergehalt von 46 %. Noch Beschichten einer Glasplatte (90 µm Naßfilmdicke) und Verdampfen des Lösungsmittels härtet der Lack bei 25° C in weniger als 1 h zu einem klebfreien Film aus, dessen Pendelhärte, gemessen nach 24 h, 180 s beträgt.

Die Lacke nach 1 und 2 enthalten nach Aushärtung keine meßbaren mit Butylacetat extrahierbaren Anteile. Bei der Beschichtung von Holz zeigen die Lacke eine sehr gute Anfeuerung, einen guten Porenfluß und gute Kratzfestigkeit. Topfzeit und Härte der Beschichtungen sind durch Mischung der Isocyanate in weiten Bereichen steuerbar.

Beispiel 2

Beispiel 2 wird mit dem Unterschied wiederholt, daß Dibutylphthalat anstelle von Polyol P1 im Verhältnis NC:DBP = 8:2 aufgebracht wird. Man erhält analog Beispiel 1 ein Produkt mit 0,8 % Restwassergehalt.

Beispiel 3

Beispiel 1 wird mit dem Unterschied wiederholt, daß das Weichmachergemisch Citronensäuretributylester/Ricinusöl = 1/1 anstelle von Polyol P1 im Verhältnis NC : Weichmacher = 75:25 aufgebracht wird. Man erhält analog Beispiel 1 ein Produkt mit 1 % Restwassergehalt.

**Ansprüche**

1. Verfahren zur simultanen Verdrängung von Wasser oder Alkohol aus damit angefeuchteter Nitrocellulose und gleichzeitiger Phlegmatisierung der Nitrocellulose, dadurch gekennzeichnet, daß man die Verdrängung des Wassers bzw. Alkohols und Einarbeitung des Phlegmatisierungsmittels auf einem Scherwalzenaggregat durchführt.

2. Verfahren entsprechend Anspruch 1, dadurch gekennzeichnet, daß das Scherwalzenaggregat eingearbeitete Nuten aufweist, die es ermöglichen, die Nitrocellulose-Weichmacher-Mischung auf dem Walzenaggregat von einem Ende zum anderen zu fördern.

3. Verfahren zur Phlegmatisierung von Nitrocellulose entsprechend Ansprüchen 1 und 2, dadurch gekennzeichnet, daß Nitrocellulose mit einem Stickstoffgehalt von 10,0 bis 12,6 % eingesetzt werden.

4. Verfahren zur Phlegmatisierung von Nitrocellulose entsprechend den Ansprüchen 1 bis 3, dadurch gekennzeichnet, daß man als Phlegmatisierungsmittel nitrocelluloselösende Substanzen verwendet.

5. Verfahren zur Phlegmatisierung von Nitrocellulose entsprechend Ansprüchen 1 bis 4, dadurch gekennzeichnet, daß das Phlegmatisierungsmittel eine Mischung aus Nitrocellulose lösenden Verbindungen und Nitrocellulose nicht-lösenden Verbindungen ist.

6. Verfahren zur Phlegmatisierung von Nitrocellulose gemäß Ansprüchen 1 bis 5, dadurch gekennzeichnet, daß mindestens 18 % Phlegmatisierungsmittel bezogen auf die Nitrocellulose-Phlegmatisierungsmittel-Gesamtmasse eingearbeitet werden.

7. Verwendung der nach den Ansprüchen 1 bis 6 erhaltenen Zubereitungen als Lackrohstoffe.

FIG. 1

FIG. 2

WW 5286

Europäisches Patentamt

**EUROPÄISCHER RECHERCHENBERICHT**

Nummer der Anmeldung

EP 89 12 0319

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | BE-A- 781 444 (L'ETAT FRANCAIS) <br> * Beispiel 1; Seite 6, Zeilen 36,37; Anspruch 1 * <br> --- | 1-7 | C 08 B 5/08 <br> C 09 D 101/18 |
| Y | US-A-2 109 599 (H.J. TATTERSALL) <br> * Seite 1, Spalte 2, Zeilen 20-22; Anspruch 1 * <br> --- | 1-7 | |
| Y | WO-A-8 802 743 (WNC-NITROCHEMIE) <br> * Zusammenfassung; Figur 1 * <br> ----- | 1-7 | |

RECHERCHIERTE SACHGEBIETE (Int. Cl.5)

C 08 B
C 08 L

Der vorliegende Recherchenbericht wurde für alle Patentansprüche erstellt

| Recherchenort | Abschlußdatum der Recherche | Prüfer |
|---|---|---|
| DEN HAAG | 22-02-1990 | SOMERVILLE F.M. |